# EUROPÄISCHE PATENTSCHRIFT

(11) **EP 2 037 235 B1**
(45) Veröffentlichungstag und Bekanntmachung des Hinweises auf die Patenterteilung: **16.03.2016**
(21) Anmeldenummer: 08015969.2
(22) Anmeldetag: 10.09.2008
(51) Int. Cl.: G01F 9/00, B23Q 11/12

(54) **Prüfgerät für ein Minimalmengenschmiersystem**
Test device for a minimum amount lubrication system
Appareil de vérification pour un système de lubrification à quantités minimales

(30) Priorität: 11.09.2007 DE 102007043199
(43) Veröffentlichungstag der Anmeldung: 18.03.2009
(73) Patentinhaber: Gühring OHG, 72458 Albstadt (DE)
(72) Erfinder: Aygün, Hakki, 72505 Göggingen-Krauchenwies (DE)
(74) Vertreter: Westphal, Mussgnug & Partner Patentanwälte mbB

(56) Entgegenhaltungen:
- EP-A1- 1 415 759
- DE-A1- 19 932 825
- DE-A1-102006 034 326
- US-A- 5 212 979
- US-A- 5 796 472
- US-A1- 2007 177 953

## Beschreibung

Die Erfindung betrifft ein Verfahren zur Prüfung eines Minimalmengenschmiersystems zum Nachweis des Kühl- und/oder Schmiermittelflusses an der Austrittsdüse des Mininmalmengenschmiersystems.

Die Kontrolle von Kühl- und/oder Schmiermittelströmen mit Flussraten in einer Größenanordnung von maximal 50 ml/h, und typischerweise 10 bis 50 ml/h spielt in der Technik, beispielsweise bei der spanabhebenden Materialbearbeitung, eine zunehmende Rolle. Einerseits sollen die Kosten für das jeweilige Kühl- und/oder Schmiermittel niedrig gehalten werden Andererseits ist das unnötige Freisetzen von Kühl- und/oder Schmiermittel in die Umgebung, das zu Luftverschmutzung, gesundheitlichen Belastungen für das Bedienpersonal und durch Verschmutzung von hergestellten Bauteilen und Umgebung hervorgerufenem Reinigungsaufwand führt, weitestgehend zu vermeiden. Der Einsatz von Werkzeugen zur Materialbearbeitung in Verbindung mit geringen Flüssen von Kühl- und/oder Schmiermittel ist unter dem Begriff "Miminalmengenschmierung" (MMS) bekannt, entsprechende Systeme werden als "Minimalmengenschmiersystem" bezeichnet.

Um mit derart geringen Mengen von Kühl- und/oder Schmiermittel arbeiten zu können, werden mit großem Aufwand die zur Materialbearbeitung verwendeten Werkzeuge und die Schmiermittelversorgung so optimiert, dass ein exakt vorgebbarer zielgerichteter Fluss von Kühl- und/oder Schmiermittel an die Bearbeitungsstelle erzeugt wird.

Während also einerseits das Bestreben darauf gerichtet ist, den Kühl- und/oder Schmiermittelfluss möglichst niedrig zu halten ist, hat andererseits ein etwaiges Unterschreiten der benötigten Kühl- und/oder Schmiermittelflüsse dramatische Konsequenzen für die Prozesssicherheit. So ist unter Umständen die einwandfreie Funktion eines Werkzeugs nicht mehr gewährleistet, so dass die Bearbeitungsqualität sinkt. Die Prozesstemperatur steigt an und es kommt zu Aufbauschneidenbildung. Nicht zuletzt fällt die Standzeit der verwendeten Werkzeuge dramatisch und die Wahrscheinlichkeit für einen Werkzeugbruch wird erhöht.

Es sind eine Reihe von Ansätzen zur Messung derart geringer Flüsse von Kühl- und/oder Schmiermitteln innerhalb der Kühl- und/oder Schmiermittelzufuhr von Minimalmengenschmiersystemen, d.h. insbesondere vor dem Werkzeug, bekannt. So zeigt zum Beispiel die DE 10 2006 034 326 A1 ein Druckdurchflussmessgerät für Kühl- und/oder Schmiermittel, bei dem eine Dürchflussturbine zur Bestimmung der durchgesetzten Menge von Kühl- und/oder Schmiermittel, ggf. einschließlich eines Trägermediums für das Kühl- und/oder Schmiermittel, und ein Drucksensor zur Messung des jeweiligen Rückstaudrucks, der sich im Kühlmittelkanal am Kühlmittelablauf einstellt, verwendet werden.

Eine andere Vorgehensweise ist aus der DE 101 32 857 A1 bekannt, bei der in der Kühl- und/oder Schmiermittelzufuhr eines Minimalmengenschmiersystems ein optischer Schlierensensor vorgesehen ist. Gemäß diesem Prinzip ist ein transparenter Bereich in der Kühl- und/oder Schmiermittelzuführleitung vorgesehen, der von einer Lichtquelle bestrahlt wird, wobei das durch den transparenten Bereich und das in diesem Bereich befindliche Kühl- und/oder Schmiermittel transmittierte Licht durch einen Lichtsensor detektiert wird. Allerdings ist diese für Laborbedingungen optimierte Vorgehensweise in realen Arbeitsumgebungen problembehaftet, da es beispielsweise leicht zu Verschmutzungen des Analysebereichs kommt, die die Messergebnisse verfälschen.

Einen zu dieser Vorgehensweise eng verwandten Ansatz zur Bestimmung minimaler Volumenströme in Leitungen lehrt die DE 199 32 825 A1, bei der ebenfalls eine von der Flüssigkeit durchströmte, transparente Kapillare mit einem parallelen Lichtstrahl durchstrahlt wird, der mittels eines strukturierten Empfängers nachgewiesen wird.

Die DE 196 51 485 C2 lehrt ein Verfahren zur optischen Messung von Gasblasen in der Kühlflüssigkeit einer Brennkraftmaschine und eine Einrichtung zur Durchführung des Verfahrens. Dabei wird Licht in die Flüssigkeit eingestrahlt und das von Gasblasen erzeugte Streulicht oder die Intensitätsänderung einer in die Kühlflüssigkeit emittierten Lichtstrahlung mit einem optischen Sensor gemessen. Durch Messungen in zwei benachbarten Abschnitten des Kühlflüssigkeitskanals lässt sich ferner die Blasengeschwindigkeit aus der Wegzeitdifferenz der Messsignale ermitteln.

Die EP 1 923 675 A1 lehrt ein Coriolis-Massen-Flussmessgerät, bei der bei einer in einer Röhre fließenden Flüssigkeit von deren Fließgeschwindigkeit abhängige Coriolis-Kräfte hervorgerufen werden, die die Position der Röhre innerhalb eines von einer Lichtquelle ausgesandten und von einem Sensor nachgewiesenen Lichtstrahls verändern und dadurch die Signalintensität beeinflussen.

Aus der DE 100 50 262 B4 sind ein Verfahren und eine Vorrichtung zur Bestimmung der Strömungsgeschwindigkeit, mit der ein Fluid in einer Hauptströmungsrichtung strömt, anhand der Nachweises eines charakteristischen Temperaturprofils an zwei Temperaturmessstellen und der Zeitdifferenz zwischen diesen Nachweisen bekannt.

Aus der US 5,212,979 ist ein Prüfgerät mit einer Lichtquelle, die im Betrieb Lichtstrahlung abstrahlt, einem lichtsensitiven Sensor, der mit einer Auswerte- und Ausgabeelektronik zur Bestimmung eines Flusses aus dem Signal des lichtsensitiven Sensors in Signalkombination steht, bekannt. Dabei wird eine Steigleitung oder Röhre bereitgestellt, in der ein verwendetes Kühl- und/oder Schmiermittel aufsteigen kann, dessen Wechselwirkung mit dem durch die Lichtquelle ausgesandten Licht dann zu einer Schwächung des nachgewiesenen Lichtes führt.

All diesen Verfahren und Vorrichtungen ist gemein, dass eine Grundvoraussetzung für ihre Anwendung darin besteht, dass die Flüssigkeit in einer Röhre strömt. Somit sind diese Ansätze prinzipiell nicht zur Messung der tatsächlich an der Austrittsdüse eines Minimalmengenschmiergerätes austretenden Schmiermittelmenge geeignet, weil das ausgetretene Schmiermittel gerade nicht mehr in einer solchen Röhre fließt.

Aus der EP 1 415 759 A1 ist ein Prüfgerät für ein Minimalmengenschmiersystem, mit dem der an einer Austrittsdüse des Minimalmengenschmiersystems austretende Kühl- und/oder Schmiermittelfluss bestimmbar ist, mit einer Lichtquelle und einem lichtsensitiven Sensor, der mit einer Auswerte- und AusgabeElektronik zur Bestimmung eines Kühl- und/oder Schmiermittelflusses aus dem Signal des lichtsensitiven Sensors in Signalkommunikation steht. Zwischen Lichtquelle und lichtsensitiven Sensor ist dabei ein Führungsglied aus einem Material angeordnet, dessen Transluzenz sich bei Benetzung mit einer verwendeten Flüssigkeit ändert.

Nachteilig bei allen bisher beschriebenen Verfahren ist somit, dass stets nur eine indirekte Aussage über die Kühlung und/oder Schmierung am eigentlichen Ort der Materialbearbeitung erfolgen kann, denn es wird nur die zugeführte Kühl- und/oder Schmiermittelmenge überwacht. Relevant ist hingegen die austretende Menge, also die Menge, die tatsächlich am Arbeitspunkt ankommt, was durch etwaige Leckagen oder auch bedingt durch Bewegung des Werkzeugs während seines Einsatzes nicht unbedingt der zugeführten Menge entsprechen muss. Konkret sind als mögliche Fehlerquellen zwischen der Schmiermittelzufuhr, an der die Überwachung stattfindet, und der Austrittsöffnug am Werkzeug das MMS-Gerät, der Kabelschlepp-Schlauch, die Drehdurchführung, der Spanner, die Spindel und Werkzeugaufnahme zu nennen. Neben Leckagen kann es auch zu Versackungen durch Toträume und Beeinflussung durch die Zentrifugalkraft kommen.

Aus der US 4 297 893 sind ein Verfahren und eine Vorrichtung zur Messung der Temperatur und der Massenflusscharakteristik eines frei fallenden Stroms geschmolzenen Materials bekannt. Dabei wird von diesem Material abgestrahlte Energie dürch mehrere voneinander beabstandete Sensoren gemessen, wobei einerseits eine Anpassung der Messintervalle und andererseits eine Zählung der Überschreitung eines Schwellenwertes verwendet wird, um die Flusseigenschaften des Stroms des geschmolzenen Materials zu ermitteln. Wesentlich für die Anwendung dieses Verfahrens ist, dass Energie vom Material abgestrahlt wird; auf die Ermittlung eines Stroms von austretendem Schmier- oder Kühlmittel ist es daher nicht anwendbar.

Alternativ ist es auch möglich, gemäß der EP 1 757 927 A2 die von einem Minimalmengenschmiersystem in die umgebende Atmosphäre abgegebene Menge von Kühl- und/oder Schmiermittel zu bestimmen. Auch bei dieser Vorgehensweise tritt aber das Problem fehlender Zuordnung des Austrittsprozesses auf. Selbst wenn man davon ausgeht, dass nur ein einzelnes Werkzeug für die Absonderung der Kühl- und/oder Schmiermittels im Raum verantwortlich wäre, könnte eine gegebene nachgewiesene Menge von Kühl- und/oder Schmiermittel, die der Sollmenge für das entsprechende Werkzeug entspricht, teils an einer undichten Stelle und teils an der Sollaustrittsstelle in die Umgebung abgegeben worden sein, so dass, obwohl die Sollmenge von abzugebendem Kühl- und/oder Schmiermittel nachgewiesen wurde, in Wirklichkeit eine unzureichende Kühlung und/oder Schmierung aufgetreten ist.

Aufgabe der Erfindung ist es, ein Konzept zur Bestimmung des Kühl- und/oder Schmiermittelflusses eines Minimalmengenschmiersystems bereitzustellen, das die beschriebenen Nachteile nicht mehr aufweist.

Diese Aufgabe wird erfindungsgemäß gelöst durch ein Verfahren zum Prüfen eines Minimalmengenschmiersystems mit den Merkmalen des Anspruchs 13.

Vorteilhafte Ausführungen und Weiterbildungen der Erfindung sind in den jeweils rückgezogenen Unteransprüchen angegeben.

Der Erfindung liegt die Erkenntnis zugrunde, dass sich die Transluzenz bestimmter Materialien mit bei Benetzung mit Kühl- und/oder Schmiermitteln definiert ändert und auf diese Weise zu einer zuverlässigen Bestimmung eines geringen Kühl- und/oder Schmiermittelflusses am Werkzeug genutzt werden kann. Unter einem geringen Kühl- und/oder Schmiermittelfluss wird dabei ein Fluss in der Größenordnung von einigen ml/h verstanden.

Ein bekanntes Prüfgerät für ein Minimalmengenschmiersystem, mit dem der an einem Werkzeug des Minimalmengenschmiersystems aus der Austrittsdüse austretende Kühl- und/oder Schmiermittelfluss bestimmbar ist, weist zumindest eine Lichtquelle, die im Betrieb Lichtstrahlung abstrahlt, einen lichtsensitiven Sensor, der mit einer Auswerte- und Ausgabeelektronik zur Bestimmung eines Kühl- und/oder Schmiermittelflusses aus dem Signal des lichtsensitiven Sensors in Signalkommunikation steht und ein zwischen Lichtquelle und lichtsensitivem Sensor angeordnetes Messvolumen, in dem eine Messplatte und/oder ein Messfilter in der Lichtstrahlung angeordnet sind, auf. Dabei sind mindestens die Messplatte oder der Messfilter aus einem Material angefertigt, dessen Transluzenz sich bei Benetzung mit einem verwendeten Kühl- und/oder Schmiermittel ändert. Der lichtsensitive Sensor wird durch durch die Messplatte und/oder den Messfilter transmittierte Lichtstrahlung beleuchtet.

Im Laufe der Zeit sammelt sich mehr und mehr Kühl- und/oder Schmiermittel auf der Messplatte und/oder dem Messfilter an, so dass dessen Transluzenz und als Folge davon dann auch die Intensität der durch den lichtsensitiven Sensor nachgewiesenen Lichtstrahlung sich zunehmend und definiert verändert. Das Sensorsignal wird durch die Auswerte- und Ausgabeelektronik ausgewertet und ausgegeben.

Gemäß einer Ausführungsform des Prüfgeräts ist eine plane Messplatte vorgesehen, je nach dem Sprühprofil der Austrittsdüse des Minimalmengenschmiersystems kann es aber auch vorteilhaft sein, die Messplatte konvex oder konkav auszuführen.

In einer besonders bevorzugten Ausführungsform des Prüfgeräts, die eine besonders einfache Einstellung des Messbereiches der Vorrichtung erlaubt, wird durch Austausch der verwendeten Messfilter an unterschiedliche Kühl- und/oder Schmiermittelflüsse angepasst.

Dabei ist entweder der Messfilter aus einem Material angefertigt, dessen Transluzenz sich bei Wechselwirkung mit dem verwendeten Kühl- und/oder Schmiermittel ändert, oder der Messfilter liegt an der Messplatte an.

In diesem Zusammenhang ist anzumerken, dass unter einem "Messfilter" im Sinne dieser Patentanmeldung ein Material zu verstehen ist, das zur Aufnahme und Speicherung von Kühl- und/oder Schmiermittel geeignet ist, so dass es bei Kontakt mit diesem durchtränkt wird.

Als besonders geeignetes Material für die Messplatte hat sich Glas, insbesondere satiniertes Glas erwiesen. Es ist aber auch möglich, Plexiglas, Kunststofffolie oder ein Metallfiltergewebe mit einer definierten Lichtdurchlässigkeit zu verwenden.

Vorteilhaft zu verwendende Messfilter sind Tiefenfilter und Porenfilter; als Materialien kommen insbesondere Glasfaser, Quarzfaser, Zellulose oder Teflon in Frage.

Dabei ist es möglich, die Vorrichtung für sämtliche durch Luft transportierbare Flüssigkeiten einzusetzen, insbesondere für langkettige Fettalkohole, synthetische Esteröle und Mineralöle.

Besonders geeignete lichtsensitive Sensoren im Zusammenhang mit der Erfindung sind Photodibdenarrays, eine CCD-Kamera oder Photozellen. Da sich die Transluzenz auch wellenlängenabhängig ändern kann, also die Farbe des durch das transluzente Material gelangenden Lichtes sich ändern kann, ist in einem solchen Fall auch ein Farbsensor verwendbar.

Als vorteilhafte Lichtquellen können LEDs, ein Laser, Weisslichtquellen, UV-Lichtqüellen oder Infrarotlichtquellen verwendet werden.

Besonders vorteilhaft ist es, wenn am Prüfgerät auch eine Öffnung vorgesehen ist, durch die eine Austrittsdüse des Minimalmengenschmiersystems in den Messraum einführbar ist. Dadurch wird sichergestellt, dass die Messung mit einem definierten Ansatzpunkt der Austrittsdüse erfolgt, was die Reproduzierbarkeit der Messungen verbessert und zugleich die Handhabung des Prüfgerätes vereinfacht.

Die Orientierung von Austrittsdüsen in Minimalmengenschmier-Systemen kann variieren. Daher ist es besonders vorteilhaft, wenn das Prüfgerät in beliebiger Orientierung zwischen vertikaler und horizontaler Ausrichtung betreibbar ist.

Weiter hat es sich als vorteilhaft erwiesen, das Prüfgerät mobil und autark auszuführen. Dabei bedeutet mobil insbesondere, dass das Prüfgerät problemlos von einem Minimalmengenschmiersystem zum nächsten versetzt und dort angewendet werden kann, so dass mit einem Prüfgerät unterschiedliche Mininalmengenschmiersysteme in derselben oder auch unterschiedlichen Werkhallen geprüft werden können. Unter autark ist zu verstehen, dass das Prüfgerät eine eigene Energieversorgung aufweist und lediglich an der Austrittsdüse, an der der Fluss von Kühl- und/oder Schmiermittel bestimmt werden muss, angeordnet werden muss.

Für den Fall des Einsatzes der Vorrichtung unter realen Fertigungsbedingungen hat sich besonders bewährt, die Signalkommunikation zwischen lichtsensitivem Sensor und Auswerte- und Ausgabeelektronik drahtlos auszuführen.

Beim erfindungsgemäßen Verfahren zur Prüfung eines Minimalmengenschmiersystems zum Nachweis des Kühl- und/oder Schmiermittelflusses an einer Austrittsdüse des Minimalmengensehmiersystems, benetzt das aus der Austrittsdüse austretende Kühl- und/oder Schmiermittel eine Messplatte und/oder einen Messfilter, wobei sich die Transluzenz mindestens der Messplatte oder des Messfilters in Abhängigkeit von der Benetzung mit dem Kühl- und/oder Schmiermittel ändert. Dabei wird die Transluzenz der Messplatte und/oder des Messfilters gemessen und der Grad der Transluzenz als Maß zur Bestimmung des Kühl- und/oder Schmiermittelflusses verwendet.

In einer vorteilhaften Ausgestaltung des Verfahrens wird zur Anpassung des Verfahrens an zu erwartende Kühl- und/oder Schmiermittelflüsse an der Austrittsöffnung des Werkzeugs der verwendete Messfilter variiert.

Eine einfache Möglichkeit zur Bestimmung der Transluzenz besteht darin, dass die Messplatte und/oder der Messfilter mit einer Lichtquelle beleuchtet werden und mit dem lichtsensitiven Sensor die durch die Messplatte und/oder den Messfilter transmittierte Lichtstrahlung gemessen wird.

Im Folgenden wird die Erfindung anhand eines Ausführungsbeispiels und der beigefügten Zeichnungen näher erläutert.

### Es zeigt

- Fig. 1a:: ein erstes Prüfgerät für ein Minimalmengenschmiersystem
- Fig. 1b:: ein zweites Prüfgerät für ein Minimalmengenschmiersystem
- Fig. 1c:: ein drittes Prüfgerät für ein Minimalmengenschmiersystem
- Fig. 2:: eine beispielhafte Messkurve.

Soweit nichts anderes erwähnt ist, kennzeichnen gleiche Bezugszeichen in allen Figuren jeweils identische Bauelemente.

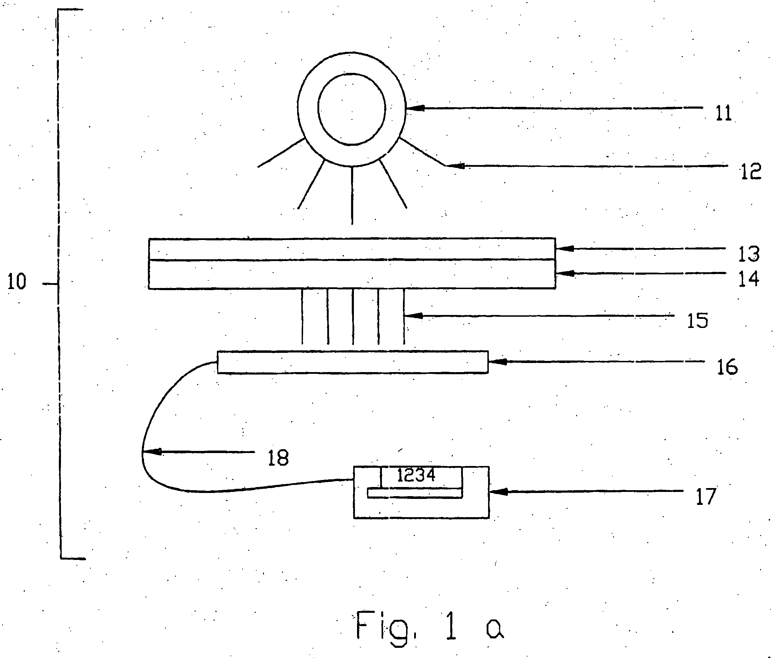

Figur 1a zeigt ein Prüfgerät 10 für ein Minimalmengenschmiersystem zur Bestimmung geringer Kühl- und/oder Schmiermittelflüsse. Das Prüfgerät 10 weist eine Lichtquelle 11 auf, die, wenn sie betrieben wird, Lichtstrahlung 12 aussendet. Die Lichtstrahlung trifft auf eine Messplatte 14, auf der im dargestellten Ausführungsbeispiel ein Messfilter 13 angeordnet ist. Die transmittierte Lichtstrahlung 15 trifft auf einen lichtsensitiven Sensor 16, der mit einer Auswerte- und Ausgabeelektronik 17 verbunden ist und dessen Signal durch die Auswerte- und Ausgabeelektronik 17 ausgewertet wird. Die Verbindung bzw. der Signaltransfer erfolgt in der dargestellten Ausführungsform über eine Datenleitung 18, kann aber beispielsweise auch drahtlos über eine Funkverbindung durchgeführt werden.

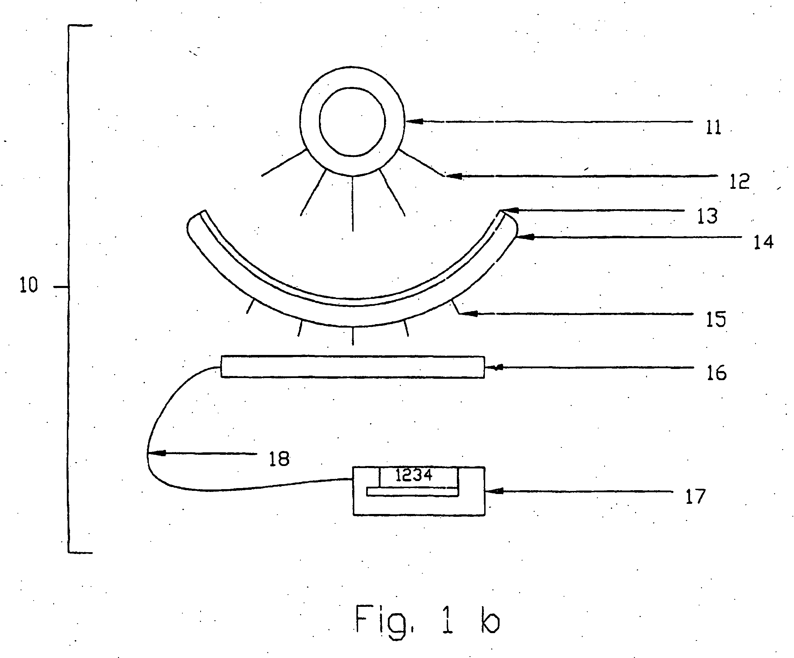

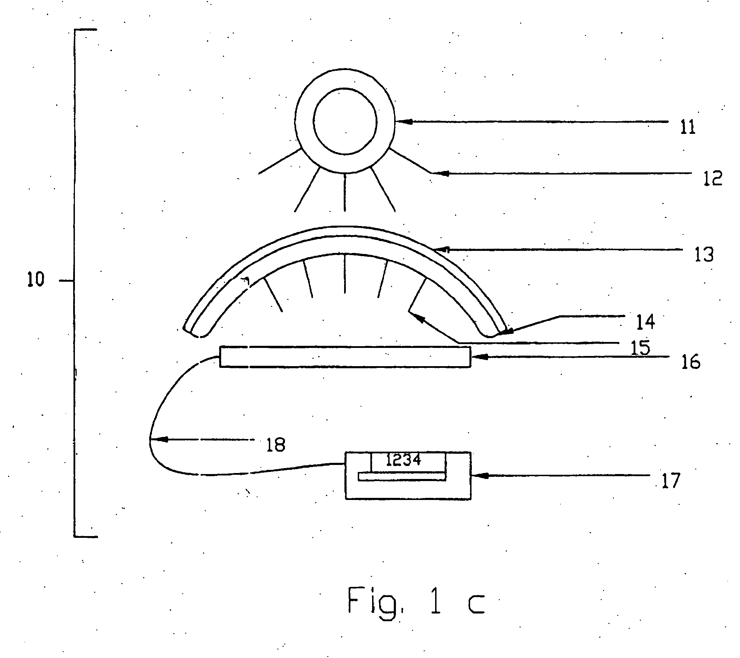

Die Messplatte 14, die in dem Ausführungsbeispiel der Figur 1a dargestellt ist, ist plan. Die Messplatte 14 kann aber auch, wie in Figur 1b gezeigt, konkav sein oder, wie Figur 1c zu entnehmen, konvex sein. Bis auf die Ausgestaltung der Messplatte 14 sind die in Figur 1b und 1c gezeigten Prüfgerate 10 mit dem in Figur 1a beschriebenen Prüfgerät 10 identisch, weshalb an dieser Stelle auf eine Wiederholung der detaillierten Beschreibung verzichtet wird.

Wesentlich für die Funktion des Prüfgeräts 10 ist, dass die Messplatte 14 und/oder der Messfilter 13 aus einem Material hergestellt sind, dessen Transluzenz sich mit zunehmender Bedeckung oder Sättigung mit dem Kühl- und/oder Schmiermittel ändert. Mit steigender Transluzenz wird in der Regel die transmittierte Lichtstrahlung 15 intensiver, was sich in einem Anwachsen des durch den lichtsensitiven Sensor 16 erzeugten Signals widerspiegelt. Es gibt aber auch Materialien, bei denen es zu einem Absinken der Transluzenz kommt; dementsprechend fällt dann das durch den lichtsensitiven Sensor 16 erzeugte Signal ab.

Führt man nun beispielsweise das Werkzeug derart an die Messplatte 14 und/oder den Messfilter 13 heran, dass das austretende Kühl- und/oder Schmiermittel auf die Messplatte 14 und/oder den Messfilter 13 gelangt, und startet den Kühl- und/oder Schmiermitteldurchfluss, wird sich eine mit zunehmender Zeit anwachsende Menge von Kühl- und/oder Schmiermittel auf der Messplatte 14 und/oder dem Messfilter 13 ansammeln. Dies kann durchaus auch bei laufendem Werkzeug geschehen, solange sichergestellt ist, dass das gesamte austretende Kühl- und/oder Schmiermittel auf der Messplatte 14 und/oder dem Messfilter 13 deponiert wird.

Das sich mit der Zeit auf der Messplatte 14 und/oder dem Messfilter 13 ansammelnde Kühl- und/oder Schmiermittel führt zu einer Veränderung der Transluzenz der Messplatte 14 und/oder des Messfilters 13 und dementsprechend zu einer Änderung des Sensorsignals, die mittels der Auswerte- und Ausgabeelektronik 17 nachgewiesen wird. Dadurch ist es insbesondere auch möglich, genau zu bestimmen, zu welchem Zeitpunkt nach dem Einschalten des Minimalmengenschmiersystems überhaupt zum ersten Mal Kühl- und/oder Schmiermittel am Einsatzpunkt bereitgestellt wird. Diese Information ist von hoher Bedeutung für die Ansteuerung der entsprechenden Minimalmengenschmiersysteme, insbesondere dann, wenn deren Lauf häufig unterbrochen wird.

Insbesondere ist es möglich, durch die Auswahl des verwendeten Messfilters 13 den Sensor gezielt auf die jeweiligen Messbedingungen, insbesondere den Messbereich hinsichtlich des Kühlund/oder Schmiermittelflusses anzupassen. Je nach Fassüngsvermögen des Messfilters 13, der beispielsweise als Filterpapier ausgestaltet sein kann, wird nämlich ein gegebener Grad von Transluzenz bei unterschiedlichen Mengen vom im Messfilter 13 aufgenommenem Kühl- und/oder Schmiermittel erreicht.

Um den Fluss von Kühl- und/oder Schmiermittel durch ein Werkzeug zu bestimmen muss lediglich die Vorrichtung 10 an der Austrittsdüse des Minimalmengenschmiersystems, z.B. an einem Ende des Bohrers oder Werkzeugs, an dem das Kühl- und/oder Schmiermittel austritt, oder an der Düse einer MMS-Lanze angeordnet werden. Dies ist vertikal oder horizontal zum Verlauf des Werkzeugs möglich; auch eine Anordnung unter einem zwischen 0 und 90 Grad liegenden Winkel ist aber denkbar. Das Werkzeug kann insbesondere während der Messung in Drehung versetzt werden, so dass eine Messung unter realen Betriebsbedingungen erfolgt.

Prinzipiell ist das Prüfgerät 10 ganz allgemein auch dort einsetzbar, wo ein Eindringen von Flüssigkeit in einen Bereich oder Raum zu überwachen ist.

Schwebstaubanteile der angesaugten Luft werden ebenfalls an Messfiltern abgeschieden. Daher ist es sinnvoll, Staubmenge und Staubinhaltsstoffe mit anschließenden gravimetrischen und analytischen Verfahren zu bestimmen, um exakte und reproduzierbare Messergebnisse zu erzielen.

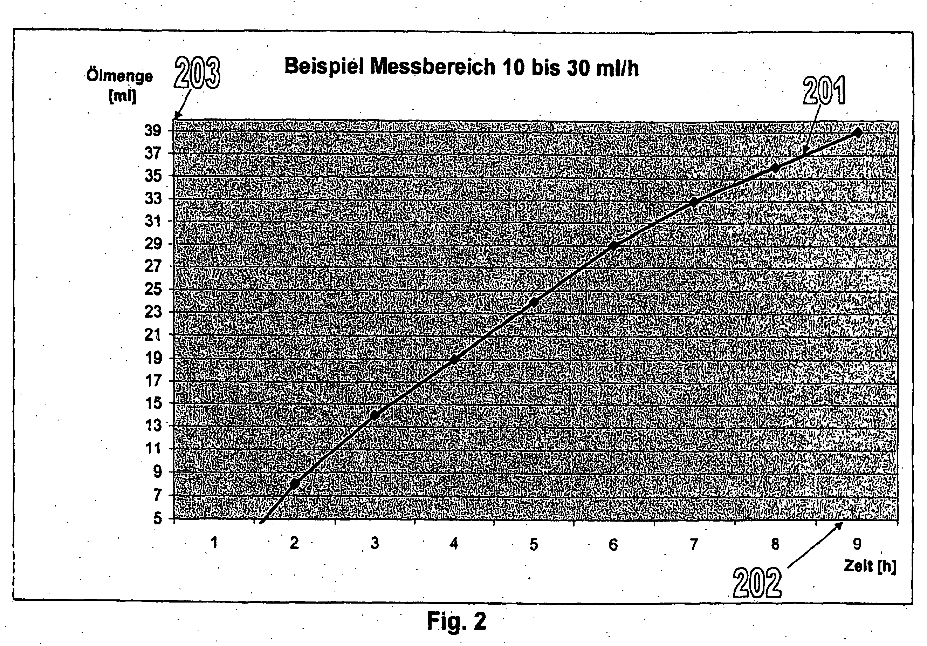

Figur 2 zeigt eine typische Messkurve 201, die mit einem erfindungsgemäßen Sensor aufgenommen wurde, wobei der verwendete Messfilter 14 für einen Messbereich zwischen 10 und 30 ml optimiert ist. Auf der Abszisse 202 des Diagramms ist die Zeit in Stunden eingetragen, auf der Ordinate 203 die zu einem gegebenen Zeitpunkt im Filter enthaltene Menge von als Kühl- und/oder Schmiermittel verwendetem Öl. Diese Menge lässt sich unter Verwendung eines Konversionsfaktors direkt aus dem Signal des lichtempfindlichen Detektors 16 errechnen, das mit steigender Transluzenz der Messplatte 14 und/oder des Messfilters 13 ansteigt. Man entnimmt der Messkurve, dass, obwohl die gemessenen Flüsse von Kühl- und/oder Schmiermittel zwischen etwa 6 ml/h und etwa 3 ml/h liegen und damit nicht im optimalen Messbereich gemessen wurde, bereits kleine Abweichungen im gemessenen Kühl- und/oder Schmiermittelfluss sicher nachgewiesen werden.

### Bezugszeichenliste

- 10: Prüfgerät
- 11: Lichtquelle
- 12: Lichtstrahlung
- 13: Messfilter
- 14: Messplatte
- 15: transmittierte Lichtstrahlung
- 16: lichtsensitiver Sensor
- 17: Auswerte- und Augabeelektronik
- 18: Kabel

- 201: Messkurve
- 202: Abszisse
- 203: Ordinate

## Patentansprüche

1. Verfahren zur Prüfung eines Minimalmengenschmiersystems zum Nachweis des Kühl- und/oder Schmiermittelflusses ah einer Austrittsdüse des Mininmalmengenschmiersystems, bei dem
- das aus der Austrittsdüse austretende Kühl- und/oder Schmiermittel eine Messplatte (14) und/oder einen Messfilter (13) benetzt, wobei sich die Transluzenz mindestens der Messplatte (14) oder des Messfilters (13) in Abhängigkeit von der Benetzung mit dem Kühl- und/oder Schmiermittel ändert,
- die Transluzenz gemessen wird und
- der Grad der Transluzenz als Maß zur Bestimmung des Kühl- und/oder Schmiermittelflusses verwendet wird.

2. Verfahren nach Anspruch 1,
**dadurch gekennzeichnet, dass** zur Anpassung des Messbereichs an den zu erwartenden Kühl- und/oder Schmiermittelfluss unterschiedliche Messfilter (13) verwendet werden.

3. Verfahren nach Anspruch 1 oder 2,
**dadurch gekennzeichnet, dass** die Messdaten zur Bestimmung der Transluzenz dadurch gewonnen werden, dass die Messplatte (14) und/oder der Messfilter (13) mit einer Lichtquelle (10) beleuchtet werden und mit dem lichtsensitiven Sensor die durch die Messplatte (14) und/oder den Messfilter (13) transmittierte Lichtstrahlung (15) gemessen wird.

## Claims

1. Method for the monitoring of a minimum quantity lubrication system for the purpose of determining the coolant- and/or lubricant flow at an exit nozzle within the minimum quantity lubrication system, where
- the coolant and/or lubricant exiting the exit nozzle moistens a measuring plate (14) and/or a measuring filter (13), in such a way that the translucence of at least the measuring plate (14) or the measuring filter (13) varies as a function of this moistening with the coolant and/or lubricant,
- the translucence is measured and
- the degree of translucence is used as a basis for determination of the coolant- and/or lubricant flow.

2. Method in accordance with Claim 1, **characterised in that** differing measuring filters (13) are used for the purpose of adjusting the measuring range to the anticipated coolant- and/or lubricant flow.

3. Method in accordance with Claim 1 or Claim 2, **characterised in that** the measuring data for determination of the translucence are obtained by a process whereby the measuring plate (14) and/or the measuring filter (13) are illuminated by a light source (10) and the luminous radiation (15) transmitted through the measuring plate (14) and/or measuring filter (13) is measured with a light-sensitive sensor.

## Revendications

1. Appareil de contrôle d'un système de lubrification à quantité minimum pour apporter la preuve de l'écoulement d'agent de refroidissement et/ou d'agent lubrifiant au niveau d'une buse de sortie du système de lubrification à quantité minimum, selon lequel :
- l'agent de refroidissement et/ou l'agent lubrifiant sortant de la buse de sortie mouille une plaque de mesure (14) et/ou un filtre de mesure (13), la translucidité de la plaque de mesure (14) ou du filtre de mesure (13) étant modifiée en fonction du mouillage avec l'agent de refroidissement et/ou l'agent lubrifiant,
- la translucidité est mesurée et
- le taux de translucidité est utilisé en tant que mesure pour déterminer l'écoulement d'agent de refroidissement et/ou d'agent de lubrification.

2. Procédé conforme à la revendication 1,
**caractérisé en ce que**
pour permettre d'adapter la plage de mesure à l'écoulement d'agent de refroidissement et/ou d'agent de lubrification attendu, on utilise différents filtres de mesure (13).

3. Procédé conforme à la revendication 1 ou 2,
**caractérisé en ce que**
les données de mesure permettant de déterminer la translucidité sont obtenues en éclairant la plaque de mesure (14) et/ou le filtre de mesure (13) avec une source de lumière (10), et avec un capteur sensible à la lumière on mesure le rayonnement lumineux (15) transmis au travers de la plaque de mesure (14) ou du filtre de mesure (13).
